# FASCICULE DE BREVET EUROPEEN

(11) **EP 0 891 266 B1**
(45) Date de publication et mention de la délivrance du brevet: **19.07.2000**
(21) Numéro de dépôt: 97920793.3
(22) Date de dépôt: 21.04.1997
(51) Int. Cl.: B60Q 1/14

(54) **COMMUTATEUR ELECTRIQUE POUR LA COMMANDE D'ECLAIRAGE DE VEHICULES AUTOMOBILES**
ELEKTRISCHER SCHALTER FUR FAHRZEUGBELEUCHTUNGSSTEUERUNG
ELECTRIC SWITCH FOR MOTOR VEHICLE LIGHTING CONTROL

(30) Priorité: 22.04.1996 FR 9605010
(43) Date de publication de la demande: 20.01.1999
(73) Titulaire: SC2N, 78180 Montigny-le-Bretonneux (FR)
(72) Inventeur: GAUTHIER, Christian, F-92200 Neuilly-sur-Seine (FR)
(74) Mandataire: Texier, Christian
(86) Numéro de dépôt international: FR9700711
(87) Numéro de publication internationale: WO9739916

(56) Documents cités:
- FR-A- 2 227 741
- US-A- 4 293 743

## Description

La présente invention concerne le domaine des commutateurs électriques. Elle s'applique en particulier aux commutateurs utilisés pour la commande des feux et moyens d'éclairage de véhicules automobiles.

Plus précisément la présente invention concerne les commutateurs à commande par une manette susceptible de trois déplacements pour le contrôle de moyens de commutation respectifs, par exemple sous forme de deux pivotements dans des plans perpendiculaires entre eux autour d'axes sensiblement transversaux à l'axe longitudinal de la manette et d'une rotation autour de cet axe longitudinal.

De nombreux commutateurs électriques répondant à la définition générale donnée ci-dessus ont déjà été proposés. Ces commutateurs connus comprennent trois coulisseaux de contactage actionnés respectivement par l'un des mouvements de la manette. Un exemple d'un tel commutateur peut être trouvé dans le document US-A-4 293 743 (correspondant au préambule de la revendication indépendante); un autre exemple de commutateur peut être trouvé dans le document FR-A-2 227 741, dont les moyens de commande sont montés à déplacement par rapport au boîtier selon quatre mouvements de pivotement généralement autour d'un même axe sensiblement perpendiculaire à l'axe longitudinal de la manette.

La présente invention a maintenant pour but de perfectionner les commutateurs connus.

Ce but est atteint selon la présente invention grâce à un commutateur électrique, notamment pour la commande des moyens d'éclairage et de signalisation d'un véhicule automobile, comprenant un boitier qui loge des moyens de commutation et une manette comportant des moyens de commande montés à déplacement par rapport au boitier selon au moins deux mouvements de pivotement dans des plans perpendiculaires entre eux autour d'axes sensiblement transversaux à l'axe longitudinal de la manette et une rotation selon l'axe de la manette pour commander respectivement au moins trois fonctions électriques de base, caractérisé par le fait que les moyens de commutation comprennent un coulisseau unique monté à déplacement selon un plan et des moyens assurant une liaison fonctionnelle entre les moyens de commande de la manette et le coulisseau, tels que le coulisseau subisse un déplacement spécifique pour chacun des trois déplacements de la manette, apte à assurer une fonction électrique respective sans perturber la commande des deux autres fonctions potentielles.

D'autres caractéristiques, buts et avantages de la présente invention, apparaîtront à la lecture de la description détaillée qui va suivre et en regard des dessins annexés, donnés à titres d'exemples non limitatifs et sur lesquels :
- la figure 1 représente une vue schématique extérieure en perspective d'un commutateur conforme à la présente invention,

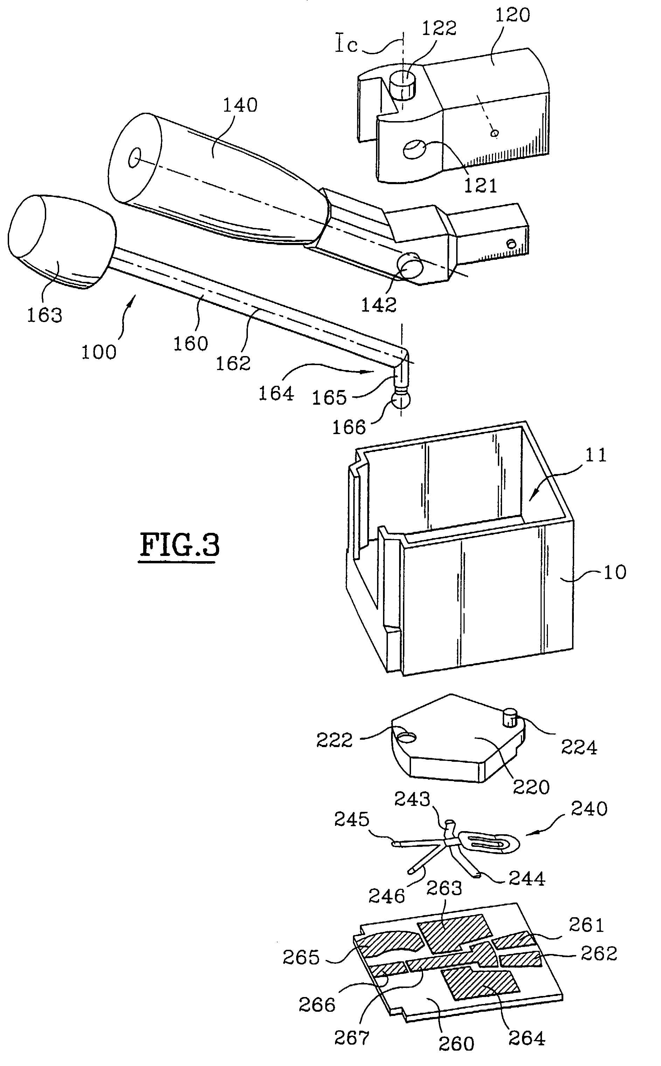

- les figures 2 et 3 représentent deux vues en perspective éclatée d'un commutateur conforme à une première variante de réalisation de la présente invention,
- les figures 4 et 5 représentent deux vues similaires en perspective éclatée d'un commutateur conforme à une seconde variante de réalisation de la présente invention,

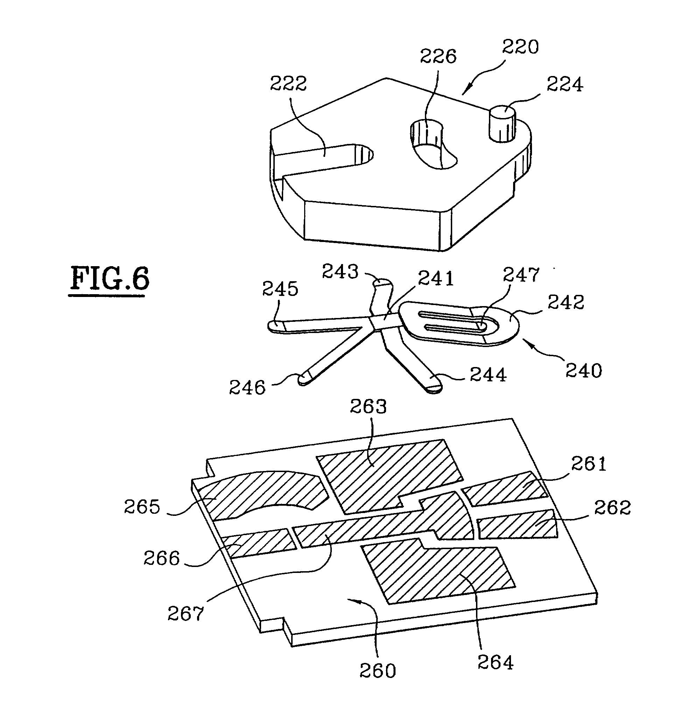

- la figure 6 représente une vue en perspective éclatée de moyens de contactage électrique conformes à la présente invention,

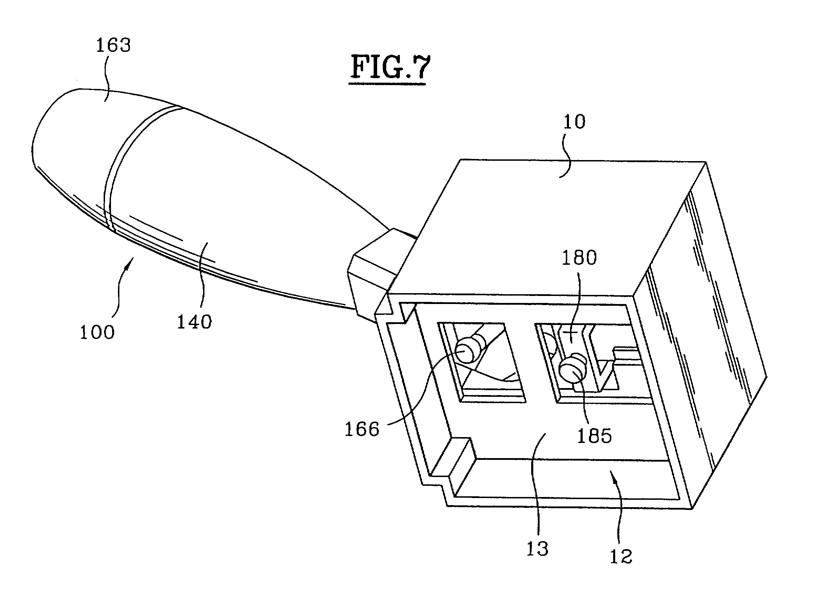

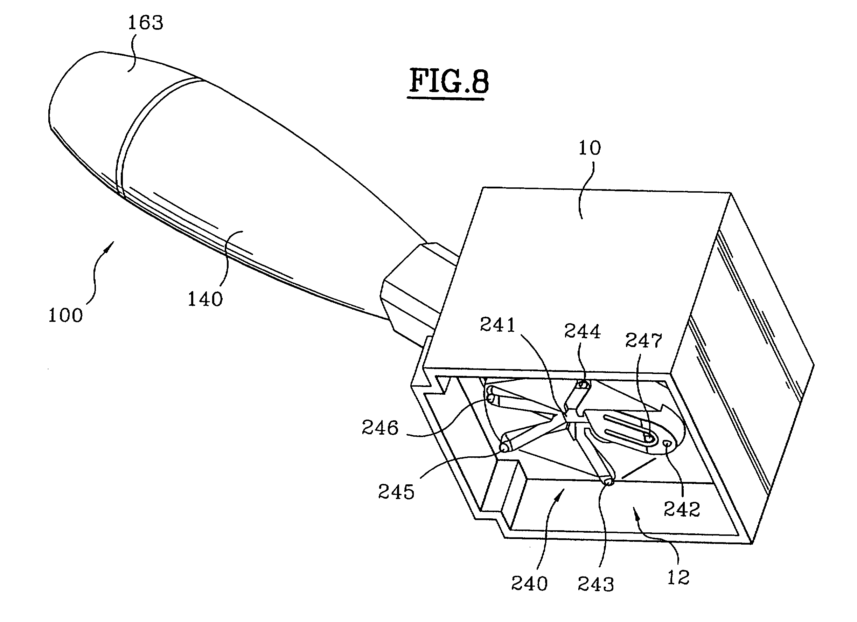

- les figures 7 et 8 représentent des vues partielles en perspective d'un commutateur conforme à la présente invention,
- les figures 9 à 19 illustrent schématiquement diverses positions relatives de lames de contactage et de plages de contact, et
- les figures 20 à 25 représentent respectivement avec un indice A, une vue partielle en perspective, avec un indice B, une vue en coupe longitudinale, avec un indice C, une vue en coupe transversale, et avec un indice D la position de contactage d'un commutateur conforme à la présente invention.

On aperçoit sur les figures annexées un commutateur conforme à la présente invention comprenant un boitier 10 qui loge des moyens de commutation 200 et comporte une manette de commande 100.

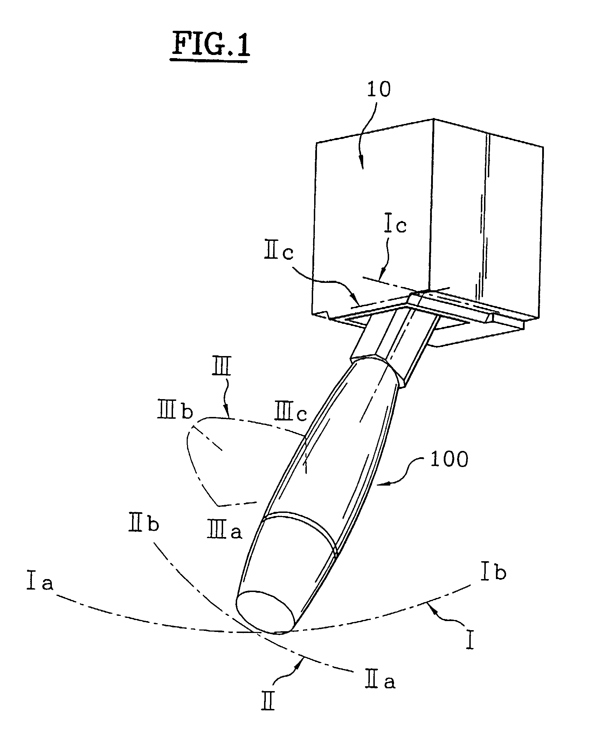

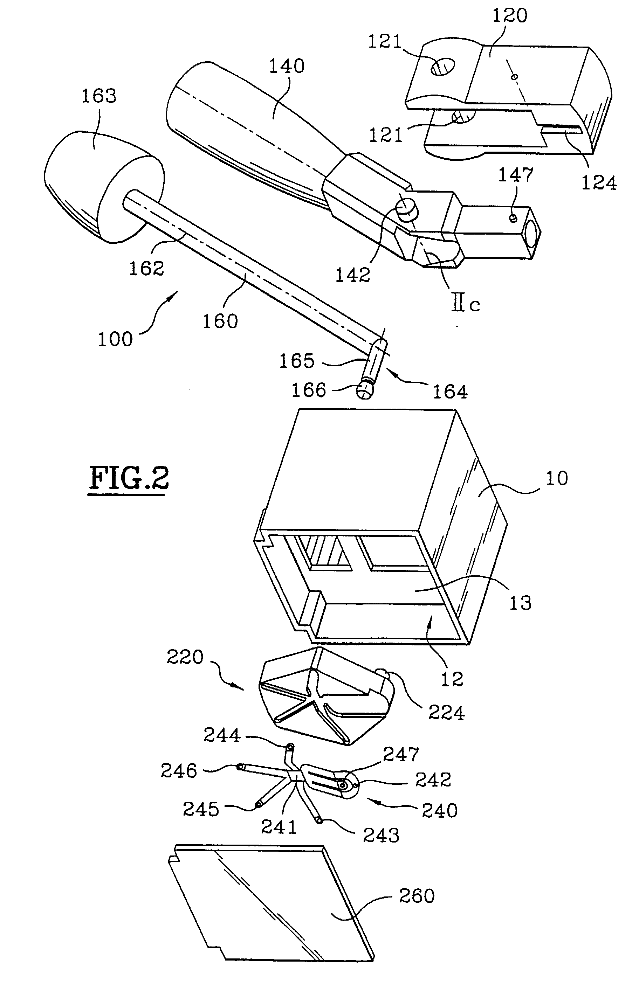

Cette manette 100 est susceptible de déplacement selon deux plans de pivotement orthogonaux et de rotation selon son axe longitudinal. Un premier plan de pivotement correspondant par exemple à une commande des indicateurs de changement de direction, est référencé I sur la figure 1; la position de la manette 100 pour l'activation des indicateurs droits étant référencée la et celle pour l'activation des indicateurs gauches étant référencée Ib. Ce premier plan de pivotement I correspond à un pivotement de la manette 100 autour d'un axe Ic. Un second plan de pivotement, orthogonal au premier, correspondant par exemple à une commande de commutation code/phare ou à une commande appel phare instable, est référencé II sur la figure 2; la position de la manette 100 pour la commande phare étant référencée IIa, tandis que la position de la manette pour la commande appel phare est référencée IIb. Ce second plan de pivotement II correspond à un pivotement de la manette autour d'un axe IIc. Enfin la rotation de la manette autour de son axe longitudinal est schématisée en III, les positions de repos, ville et route étant respectivement répérées en IIIa, IIIb et IIIc.

De préférence dans le cadre de la présente invention, toutes les positions précitées sont possibles simultanément, à l'exception de la position phare qui n'est accessible qu'en position route seulement.

Le boitier 10 peut faire l'objet de nombreux modes de réalisation. Il est de préférence formé par moulage de matière plastique, éventuellement par assemblage de plusieurs pièces.

Comme on le voit sur les figures annexées, le boitier 10 peut avoir une forme généralement parallèlépipédique, et être divisé en deux compartiments 11 et 12 par une cloison ajourée 13.

La manette 100 comprend essentiellement une chape 120, un corps de manette 140 et un entraîneur 160.

La chape 120 est logée dans le boitier 10. Elle est guidée à pivotement dans le boitier 10 autour de l'axe Ic. Cet axe Ic peut être matérialisé par exemple par un tourillon 122.

Le corps de manette 140 est généralement cylindrique allongé. Il émerge à l'extérieur du boitier 10. Le corps 140 est monté à pivotement sur la chape 120 autour de l'axe IIc. Cet axe IIc peut être matérialisé par deux tourillons coaxiaux 142 formés sur le corps de manette 140 et engagés dans des alésages complémentaires 121 formés sur les ailes de la chape 120.

Comme indiqué précédemment les axes Ic et IIC sont orthogonaux entre eux.

L'entraîneur 160 est formé essentiellement d'une tige centrée dans le corps de la manette 140. L'entraîneur 160 est susceptible de rotation par rapport au corps 140, autour de son axe longitudinal 162. L'extrémité proximale 163 de l'entraîneur 160 émerge sur l'extérieur du corps 140 et du boitier 10 pour être accessible à un utilisateur.

De même l'extrémité distale 164 de l'entraîneur 160, interne au boitier 10, émerge du corps 140. Plus précisément cette extrémité distale 164 est formée d'un doigt excentré par rapport à l'axe longitudinal 162, par exemple sous forme d'une poutre 165 globalement transversale à l'axe longitudinale 162. Au repos l'axe de la poutre 165 et l'axe Ic peuvent être sensiblement coplanaires.

Les moyens de commutation 200 placés dans le boîtier 10 comprennent essentiellement un coulisseau ou porte-contact 220, des contacts 240 et un circuit électrique 260.

Le porte-contact 220 est formé d'une plaque rigide guidée à déplacement dans le second compartiment 12 du boîtier, parallèlement à ses faces principales.

Il est prévu par ailleurs des moyens de liaison fonctionnelle entre le porte-contact 220 et la manette 100, plus précisément l'entraineur 140 et la chape 160.

La liaison entre le porte-contact 220 et l'entraîneur 140 est assurée par une rotule 166 formée sur l'extrémité de la poutre 165 et engagée dans une ouverture correspondante 222 du porte-contact 220.

Selon la variante de réalisation des figures 1 et 2, l'ouverture 222 est cylindrique de révolution ou hémi-sphérique, complémentaire de la rotule 166.

La liaison entre le porte-contact 220 et la chape 120 est assurée par un doigt 224 en saillie sur la surface supérieure du porte-contact 220 et engagé dans une rainure 124 formée sur la chape 120.

L'axe longitudinal de la rainure 124 est coplanaire de l'axe longitudinal 162 de la manette 160. L'axe du doigt 224 est parallèle à l'axe Ic.

La coopération définie entre la rotule 166 et l'ouverture 222, et entre le doigt 224 et la rainure 124 est assurée à travers les ouvertures ménagées dans la cloison 13.

L'homme de l'art comprendra aisément que lorsque la manette 100 est entrainée à pivotement autour de l'axe Ic, la coopération définie entre le doigt 224 et la rainure 124 provoque une rotation du porte-contact 220 autour de l'axe de la poutre 165.

Lorsque le corps 140 est déplacé à pivotement autour de l'axe IIc, la rotule 166 décrit un mouvement circulaire centré sur cet axe IIc; par conséquent la coopération définie entre la rotule 166 et l'ouverture 222 provoque une translation du porte-contact 220 dans une direction généralement parallèle à l'axe longitudinal 162.

Enfin lorsque l'entraîneur 160 est entraîné à rotation autour de son axe longitudinal 162, la rotule 166 décrit un mouvement circulaire centré sur cet axe 162; par conséquent la coopération définie entre la rotule 166 et l'ouverture 222 provoque une rotation du porte-contact 220 autour de l'axe du doigt 224.

Le cas échéant il peut être prévu également une possibilité de translation de l'entraîneur 160, selon son axe 162, par rapport au corps 140. Une telle translation de l'entraineur 160 provoque une translation du porte-contact 220, similaire à celle obtenue lors du pivotement du corps 140 autour de l'axe IIc, grâce à la coopération résultant de l'engagement de la rotule 166 dans l'ouverture 222.

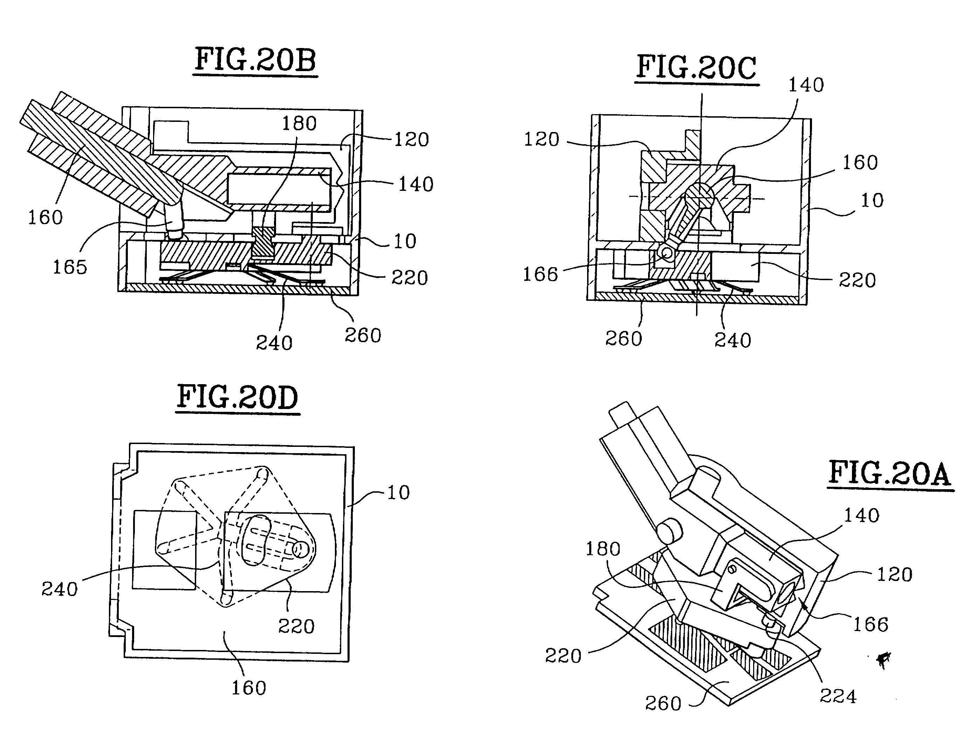

Bien entendu il est prévu également des moyens d'indexation de la chape 120, du corps 140 et de l'entraîneur 160 dans leurs mouvements précités. De tels moyens d'indexation, connus en eux-mêmes et formés essentiellememt d'un plot sollicité élastiquement contre une rampe d'indexation, n'ont pas été illustrés sur les figures annexées et ne seront pas décrits par la suite. Cependant on aperçoit sur les figures 20A à 25A et 20C à 25C les rampes 126 formées sur l'intérieur de la chape 120, en regard de l'extrémité du corps 140 pour assurer l'indexation du corps 140 par rapport à la chape, lors du pivotement du corps 140 autour de l'axe IIc.

Les contacts 240 et le circuit électrique 260 sont adaptés pour générer des effets de commutation spécifiques pour chacun des déplacements précités des éléments de la manette 100, sans perturber les autres fonctions de commutation électrique potentielles.

Les contacts 240 ont la forme générale d'une étoile monopièce en matériau électriquement conducteur élastique.

Ces contacts 240 coopèrent avec des pistes 261 à 267 prévues sur le circuit 260.

Plus précisément selon le mode de réalisation préférentiel, mais non limitatif représenté sur les figures annexées, les contacts 240 ont la forme d'une étoile non plane comportant une base centrale 241 et six branches 242 à 247.

La base 241 est liée au porte-contact 220. Les branches 242 à 247 sont situés d'un même côté de l'embase 241, en regard du circuit 260. Chaque branche 242 à 247 est muni d'un grain de contact à son extrémité libre opposée à la base 241, lequel grain de contact coopère avec une piste 261 à 267.

Les contacts 240 possèdent un plan de symétrie qui coincide sensiblement avec l'axe longitudinal 162 de la manette.

Deux branches 243 et 244 latérales, et généralement transversales à ce plan de symétrie, coopèrent avec des pistes 263 et 264 respectivement pour assurer l'alimentation du commutateur.

Deux autres branches 245 et 246 en V prévues à une extrémité de la base 241 coopèrent respectivement pour la branche 245 avec une piste 265 pour assurer l'alimentation des lanternes et pour la branche 246 avec des pistes 266 et 267 pour assurer alternativement l'alimentation des codes ou des phares.

Une branche 247 longitudinale prévue sur l'extrémité de la base 241 opposée aux branches 245 et 246 coopère avec la piste 267 pour la commande d'appel phare.

Enfin une branche 242 en forme de boucle, qui entoure la branche 247 précitée, coopère avec les pistes 261 et 262 pour assurer alternativement l'alimentation des indicateurs de changement de direction gauche et droit.

L'amplitude et le positionnement des pistes 261 à 267 sont adaptés pour assurer le maintien d'un effet de commutation électrique sélectionné quelque soit l'état ou l'évolution des autres fonctions.

La géométrie de ces pistes 261 à 267 peut faire l'objet d'un grand nombre de variantes. Pour cette raison, la géométrie de ces pistes 261 à 267 ne sera pas décrite dans le détail par la suite.

On notera cependant que les pistes 261 et 262 sont formées de plages en secteurs de couronne symétriques par rapport à un plan qui coincide sensiblement avec l'axe longitudinal 162. Il est ménagé entre ces pistes 261 et 262 un espace qui autorise le passage des grains des branches 242 et 247, sans contact physique.

Les plages 266 et 267 sont formées essentiellement de plages parallélépipédiques alignées selon le plan. de symétrie précité, la plage 267 possédant une tête élargie adjacente aux pistes 261 et 262.

Les plages 263 et 264 sont situées respectivement de part et d'autre de la piste 267.

Enfin la piste 265 est formée d'un secteur de couronne centré sur l'axe de la poutre 165.

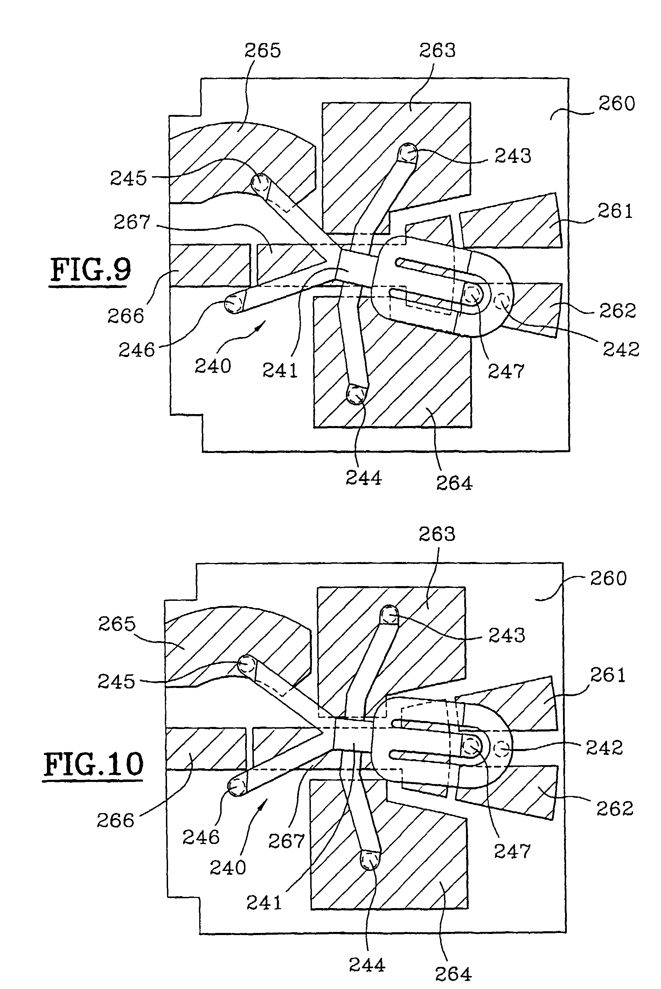

On a illustré sur les figures 9 à 19 la position relative des contacts 240 et du circuit 260 dans les positions suivantes :
- figure 9 : alimentation des lanternes et des clignotants gauches,
- figure 10 : alimentation des lanternes,

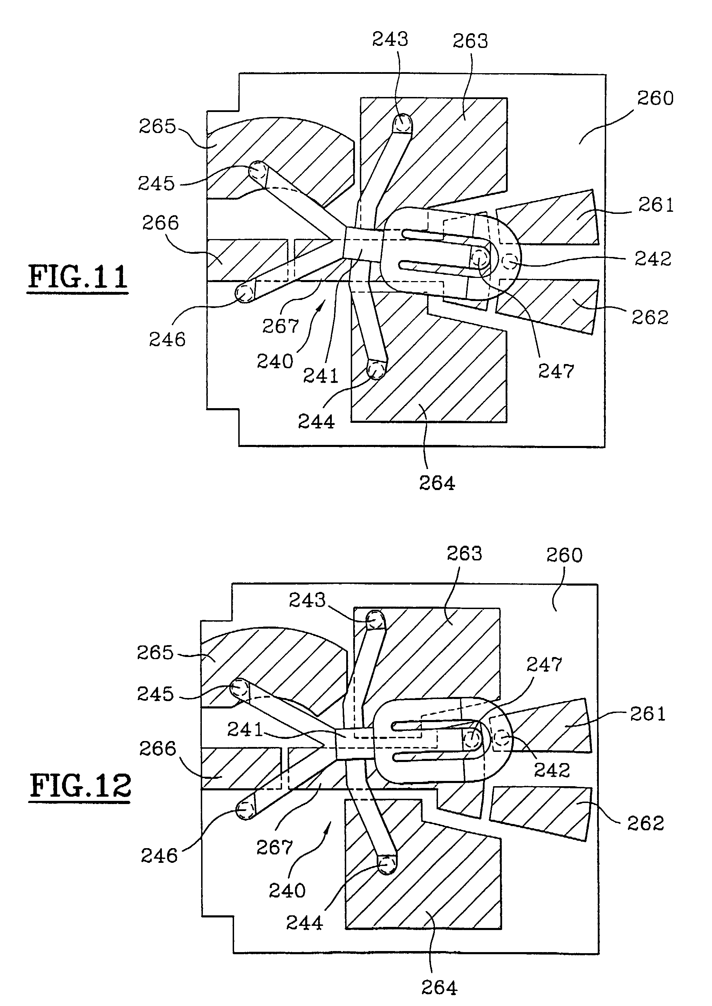

- figure 11 : alimentation des lanternes et appel phare,
- figure 12 : alimentation des lanternes, appel phare et clignotants gauches,

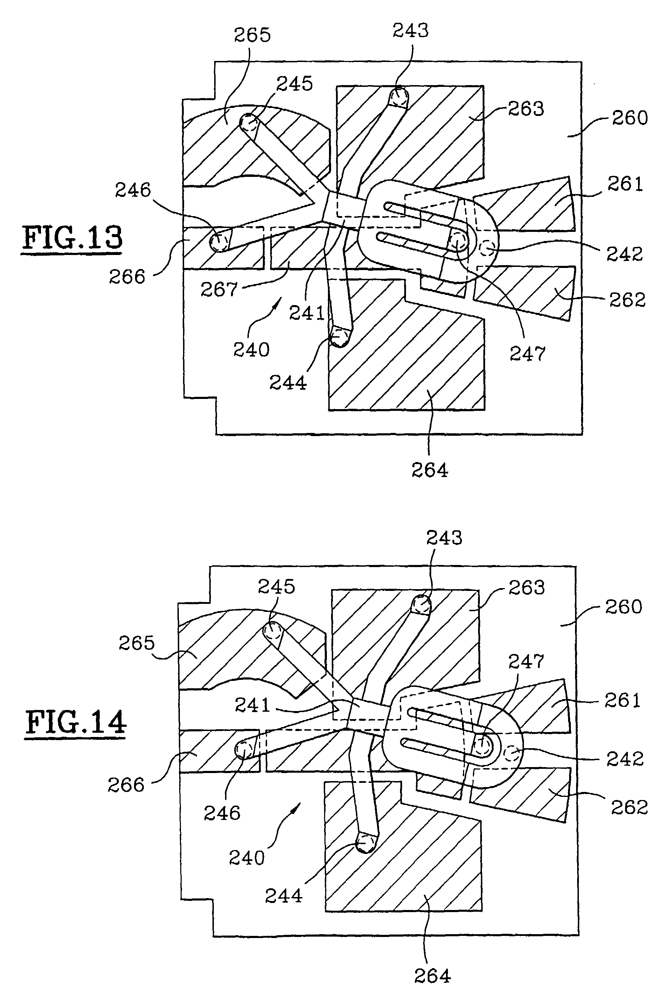

- figure 13 : alimentation des lanternes, code et appel phare,
- figure 14 : alimentation des lanternes et code,

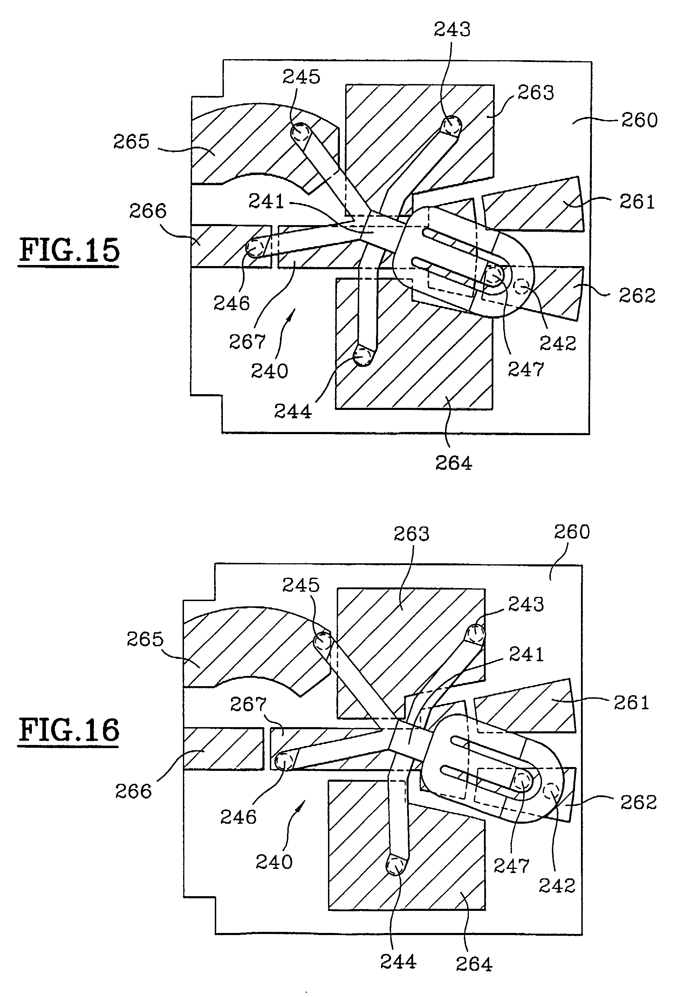

- figure 15 : alimentation des lanternes, code et clignotants droits,
- figure 16 : alimentation des lanternes, phare et clignotants droits,

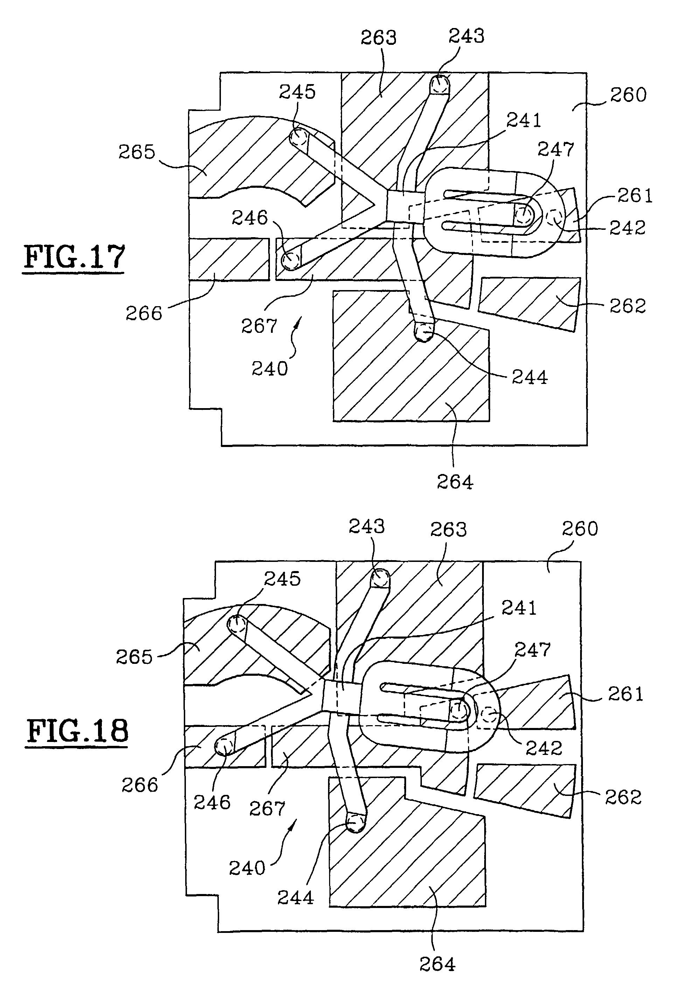

- figure 17 : alimentation des lanternes, phare et clignotants gauches,
- figure 18 : alimentation des lanternes, code, appel phare et clignotants gauches,

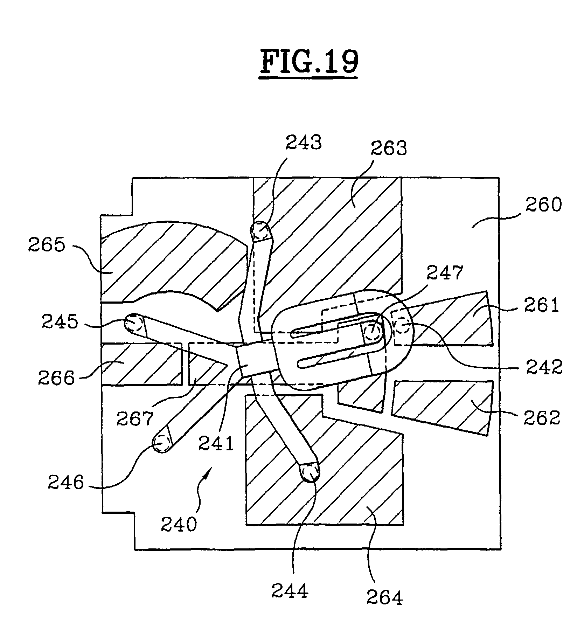

- figure 19 : alimentation des appel phare et clignotants gauches.

L'homme de l'art appréciera à l'examen comparé des figures 9 à 19 que la coopération définie entre les contacts 242 à 247 et les pistes 261 à 267 permet de modifier individuellement chacune des fonctions de commutation sans perturber les autres fonctions potentielles.

On notera que selon des caractéristiques avantageuses de la présente invention :
- les grains de contacts prévus sur les branches 242 et 247 assurant les fonctions de commutation clignotant et appel phare sont sensiblement centrés sur l'axe de pivotement matérialisé par le tourillon 224 et
- en position route, le plot de contact code prévu sur la branche 246 est sensiblement centré sur l'axe de la poutre 165 et l'axe Ic de pivotement de la chape 120.

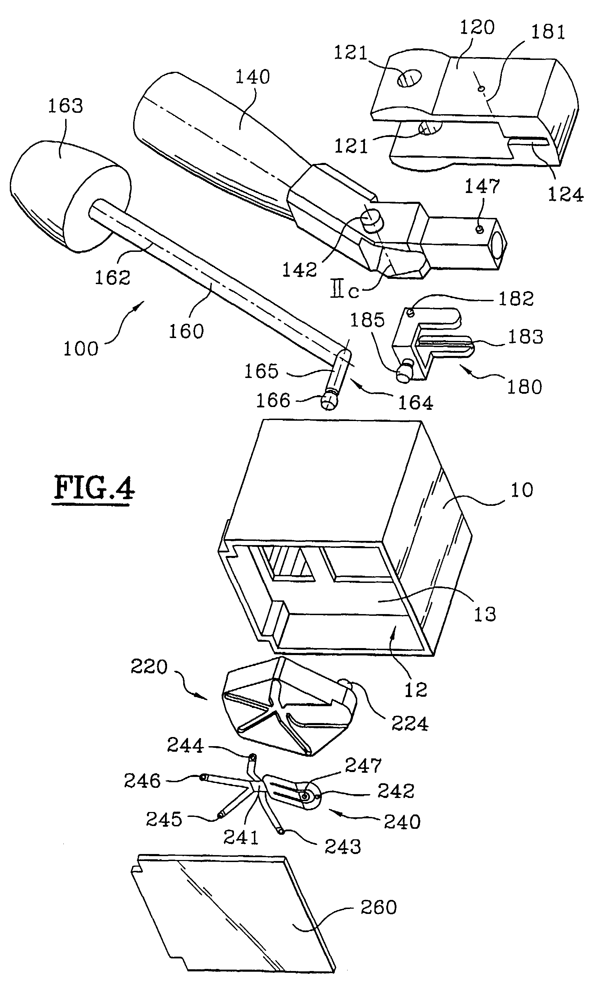

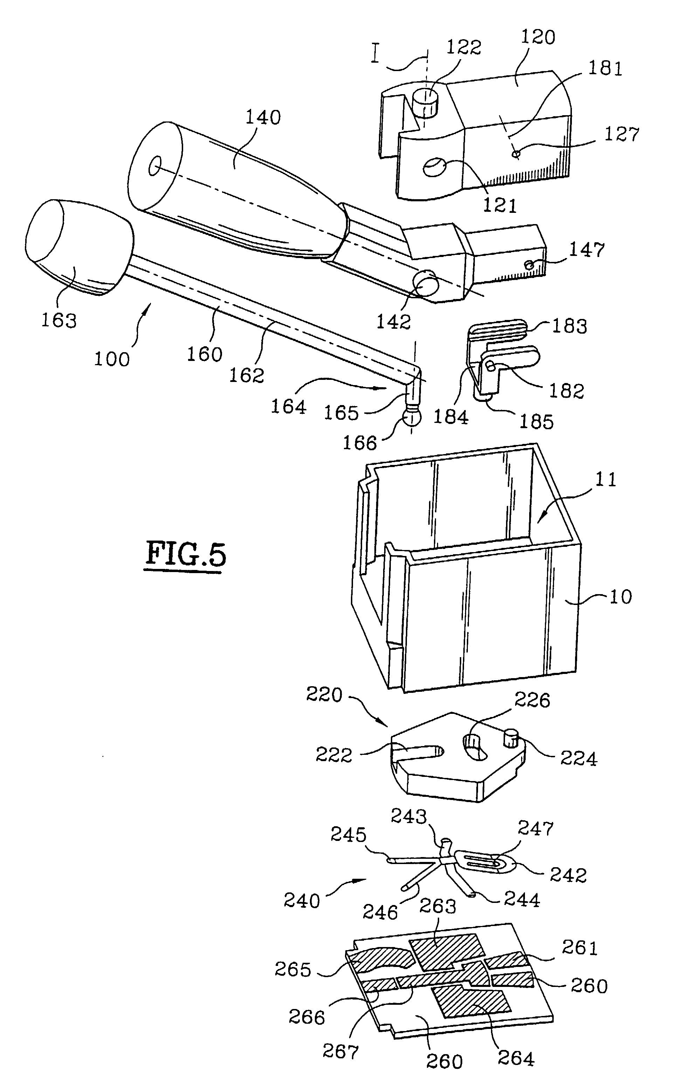

On a illustré sur les figures 4 et 5 une variante de réalisation conforme à la présente invention dans laquelle le commutateur comporte en outre une bascule 180 assurant une liaison entre le corps de manette 140 et le porte-contact 220.

Cette bascule 180 a pour but d'amplifier le déplacement du porte-contact 220 lorsque le corps 140 est déplacé à pivotement autour de l'axe IIc.

La bascule 180 a la forme générale d'une chape dont chaque aile comporte deux branches orthogonale entre elles.

La bascule 180 est montée à pivotement sur la chape 120 autour d'un axe 181 parallèle à l'axe de pivotement IIc du corps 140, mais distinct de cet axe IIc. L'axe 181 est matérialisé par des tourillons 182 formés sur la bascule 180 et engagés dans des ouvertures complémentaires 127 ménagées dans la chape 120.

Des branches de la bascule 180 parallèles à l'extrémité distale du corps 140 et placées respectivement de part et d'autre de celle-ci comportent un guide rectiligne 183 qui reçoit un pion 147 en saillie sur les flans de l'extrémité distale du corps.

L'âme 184 de la bascule 180 porte un pion 185 en saillie, lequel pénètre dans une gorge incurvée 226 formée dans le porte-contact 220. Cette gorge 226 est formée d'un secteur de cylindre centré autour de l'axe du pion 224.

En outre selon le mode de réalisation des figures 4 et 5, l'ouverture 222 est formée d'une rainure située dans le plan de symétrie du porte-contact 220, qui coincide sensiblement avec l'axe longitudinal 162.

Lorsque le corps 140 est entraîné à pivotement par rapport à la chape 120 autour de l'axe IIc, la bascule 180 est entrainée à pivotement autour de l'axe 127, ce qui amplifie le mouvement de pivotement du doigt 185, et par conséquent l'amplitude de la translation résultante du porte-contact 220.

On a illustré sur les figures 20 à 25 un commutateur conforme à la présente invention, respectivement dans les positions suivantes :
- figure 20 : alimentation position route et phare,

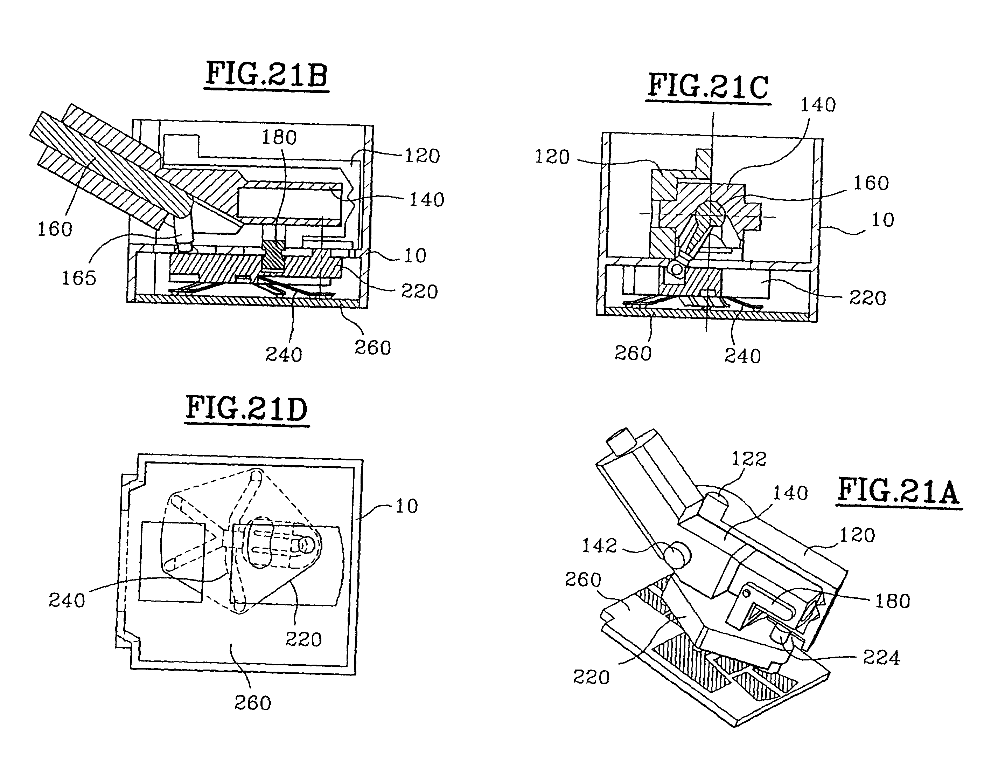

- figure 21 : alimentation position route, code et clignotants gauches,

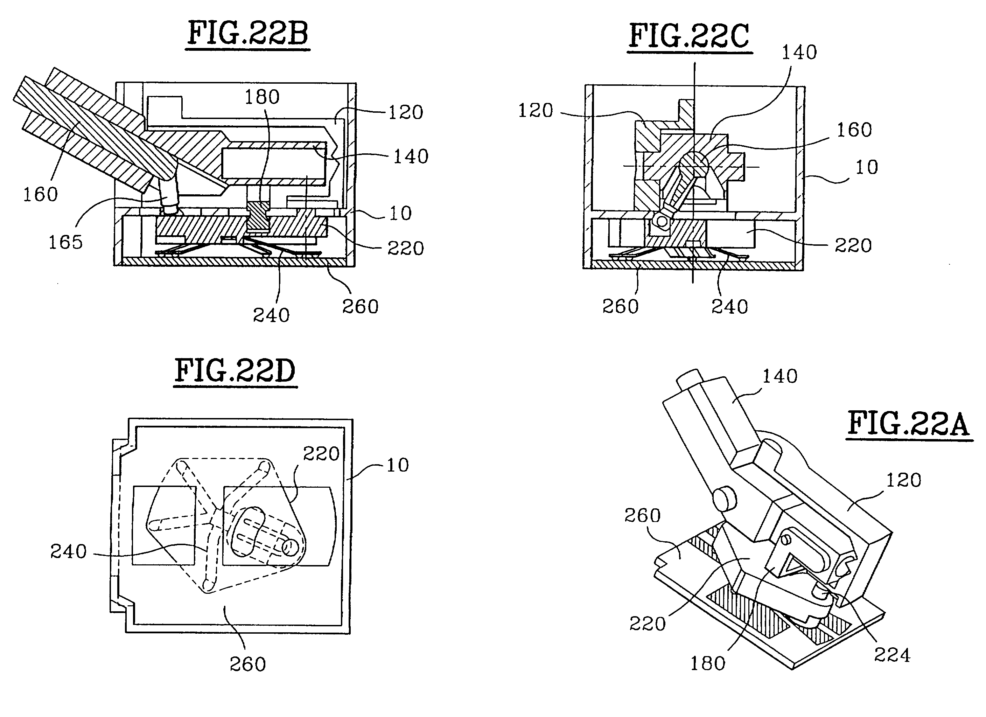

- figure 22 : alimentation position route, code et clignotants droits,

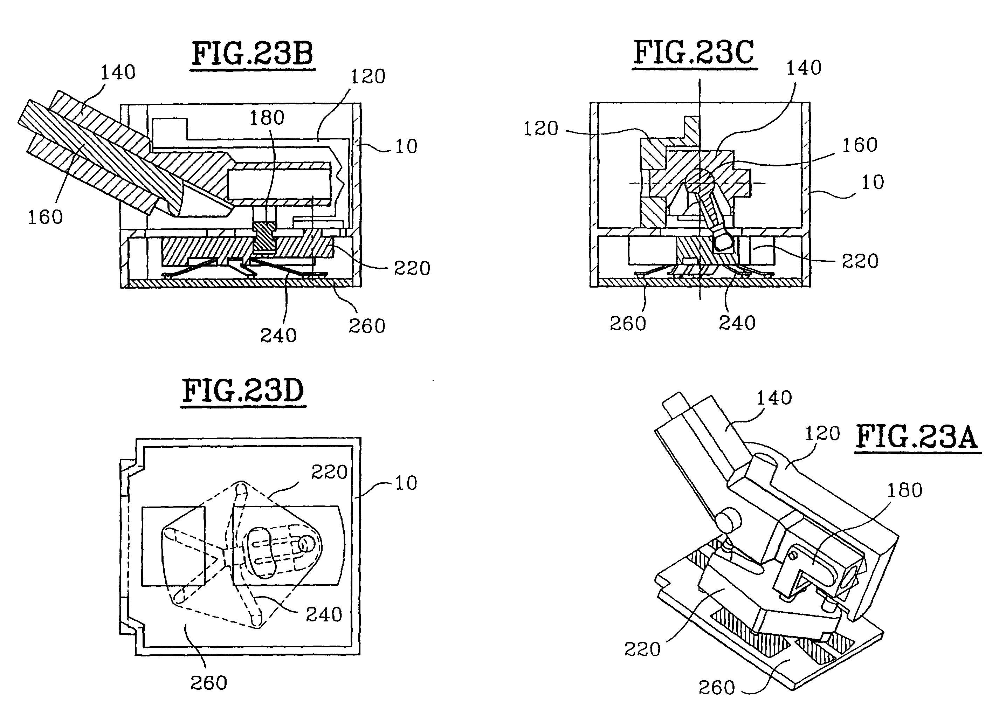

- figure 23 : alimentation position zéro,

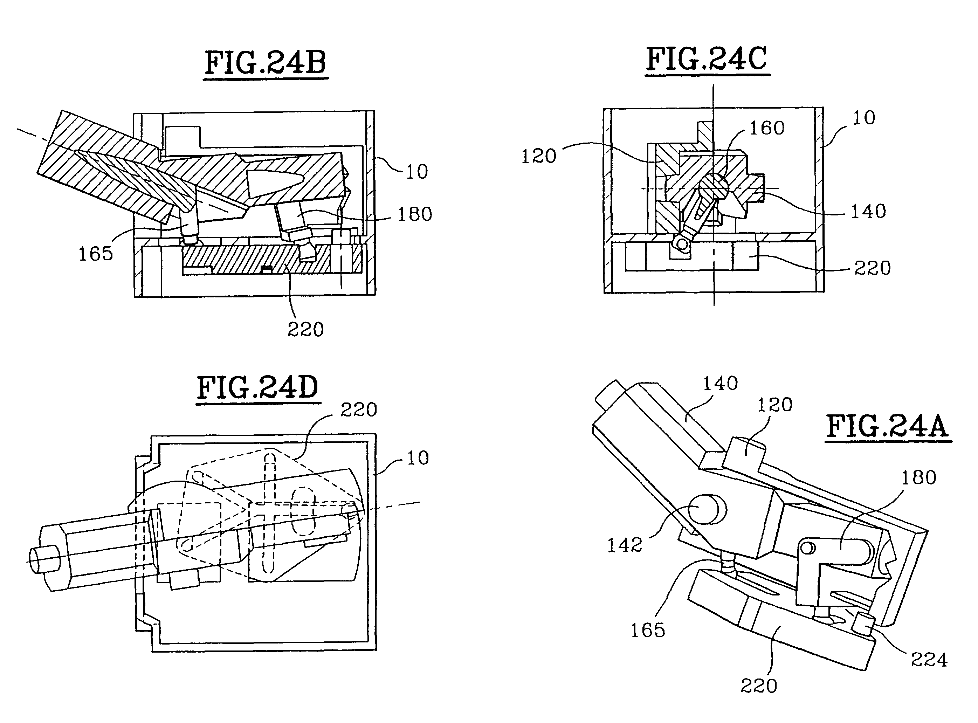

- figure 24 : alimentation position route, phare et clignotants gauches,

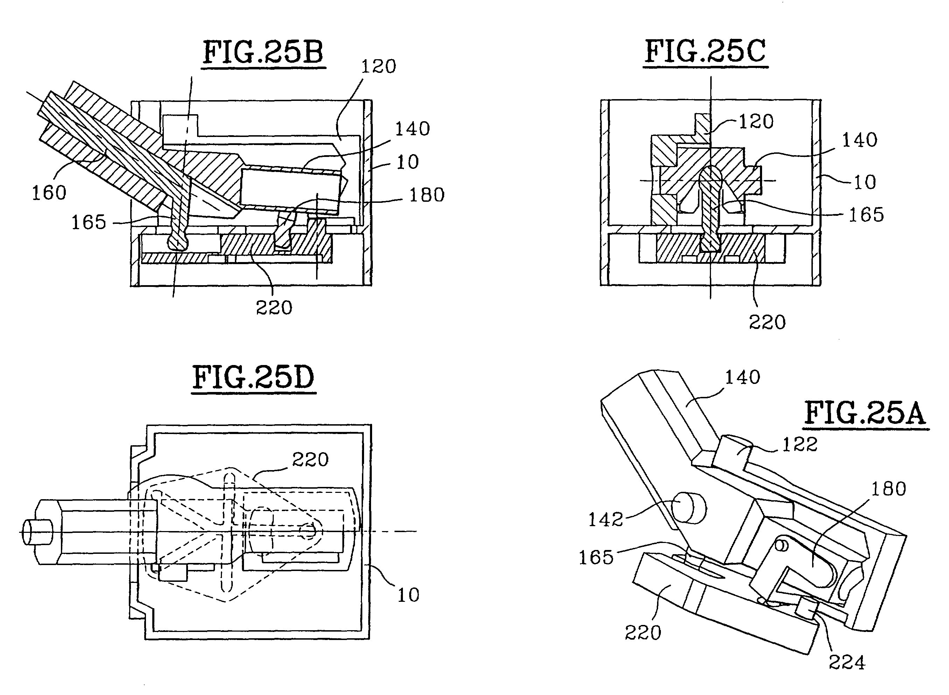

- figure 25 : alimentation position ville, et appel phare.

Dans le cadre de la présente invention, le commutateur peut être utilisé pour commuter directement la puissance d'alimentation requise pour les moyens d'éclairage ou d'indication. Il suffit d'adapter en conséquence les contacts 240 et pistes 260 associés. Dans ce cas les moyens d'indexation associés aux éléments de la manette 100 doivent définir des positions stables.

Cependant selon une variante, le commutateur conforme à la présente invention peut être utilisé en mode impulsionnel, l'effet de commutation généré par la coopération des contacts 240 et pistes 260 assurant le contrôle de relais ou moyens équivalents, eux-mêmes conçus pour assurer la commutation de la puissance requise. Dans ce cas les moyens d'indexation associés aux éléments de la manette 100 doivent définir des positions instables, par exemple sous forme de simples rampes en forme de cone ou sphère.

En l'outre l'ergonomie du commutateur peut faire l'objet de nombreuses variantes de réalisation.

Par exemple dans le cas d'une commande de type impulsionnel, les positions phare et appel phare peuvent être obtenues par pivotement du corps 140, autour de l'axe IIc, d'un même côté d'une position de repos. Dans ce cas on peut par ailleurs exploiter une translation de l'entraineur 160 selon son axe pour assurer une translation du porte-contact 220 dans un sens opposé de la translation résultant du pivotement précité du corps 140, par exemple pour une commande de feux brouillard arrière.

La présente invention présente en particulier l'avantage de réduire le coût de fabrication des commutateurs électriques et d'améliorer la fiabilité, par rapport aux systèmes classiques connus, grâce à sa simplicité de réalisation.

## Revendications

1. Commutateur électrique, notamment pour la commande des moyens d'éclairage et de signalisation d'un véhicule automobile, comprenant un boitier (10) qui loge des moyens de commutation (200) et une manette (100) comportant des moyens de commande (120, 140, 160) montés à déplacement par rapport au boitier (10) selon au moins deux mouvements de pivotement (I, II) dans des plans perpendiculaires entre eux autour d'axes sensiblement transversaux à l'axe longitudinal de la manette et une rotation (III) selon l'axe (162) de la manette (100) pour commander respectivement au moins trois fonctions électriques de base, caractérisé par le fait que les moyens de commutation (200) comprennent un coulisseau (220) unique monté à déplacement selon un plan et des moyens (166, 222 ; 124, 224) assurant une liaison fonctionnelle entre les moyens de commande (120,140, 160) de la manette (100) et le coulisseau (220), tels que le coulisseau (220) subisse un déplacement spécifique pour chacun des trois déplacements de la manette (100), apte à assurer une fonction électrique respective sans perturber la commande des deux autres fonctions potentielles.

2. Commutateur selon la revendication 1, caractérisé par le fait qu'un élément (160) de la manette (100) est en outre susceptible d'un quatrième mouvement, de translation selon son axe (162), pour exécuter une quatrième fonction électrique et qu'il est prévu également des moyens de liaison fonctionnelle entre cet élément (160) et le coulisseau (220).

3. Commutateur selon l'une des revendications 1 ou 2, caractérisé par le fait que la manette (100) comprend une chape (120) guidée à pivotement dans le boîtier (10) autour d'un premier axe (Ic), un corps de manette (140) qui émerge à l'extérieur du boîtier (10) et est monté à pivotement sur la chape (120) autour d'un second axe (IIc) et un entraîneur (160) formé d'une tige logée dans le corps de manette (140) et susceptible de rotation par rapport au corps (140) autour de son axe longitudinal (162).

4. Commutateur selon la revendication 3, caractérisé par le fait que l'axe (Ic) de pivotement de la chape (120) et l'axe (IIc) de pivotement du corps (140) sont orthogonaux.

5. Commutateur selon l'une des revendications 3 ou 4, caractérisé par le fait que l'entraîneur (160) est en outre susceptible de translation longitudinale par rapport au corps (140).

6. Commutateur selon l'une des revendications 3 à 5, caractérisé par le fait que l'extrémité proximale (163) de l'entraîneur (160) émerge sur l'extérieur du corps (140) et du boîtier (10) pour être accessible à un utilisateur, tandis que l'extrémité distale (164) de l'entraîneur (160) interne au boîtier (10) émerge du corps (140) et comporte un doigt excentré par rapport à l'axe longitudinal (162) de l'entraîneur (160).

7. Commutateur selon la revendication 6, caractérisé par le fait que l'axe du doigt (165) prévu à l'extrémité distable (164) de l'entraîneur (160) coïncide sensiblement avec l'axe de pivotement (Ic) de la chape (120).

8. Commutateur selon l'une des revendications 3 à 7, caractérisé par le fait qu'il comprend en outre une bascule (180) assurant une liaison entre le corps de manette (140) et le coulisseau (220).

9. Commutateur selon la revendication 8, caractérisé par le fait que la bascule (180) est adaptée pour amplifier le déplacement du coulisseau (220) lorsque le corps (140) est déplacé à pivotement.

10. Commutateur selon l'une des revendications 3 à 9, caractérisé par le fait qu'il est prévu des moyens de liaison fonctionnelle (166, 222 ; 124, 224) entre le coulisseau (220) et l'entraîneur (160) et la chape (120).

11. Commutateur selon la revendication 10, caractérisé par le fait que la liaison entre le coulisseau (220) et l'entraîneur (160) est assurée par une rotule (166) formée sur l'extrémité de l'entraîneur (165) et engagée dans une ouverture correspondante (222) du coulisseau (220).

12. Commutateur selon la revendication 11, caractérisé par le fait que l'ouverture (222) du coulisseau (220) est cylindrique de révolution ou hémi-sphérique, complémentaire de la rotule (166).

13. Commutateur selon la revendication 11 prise en combinaison avec la revendication 9, caractérisé par le fait que l'ouverture (222) du coulisseau (220) est formée d'une rainure située dans le plan de symétrie du coulisseau (220).

14. Commutateur selon l'une des revendications 10 à 13, caractérisé par le fait que la liaison entre le coulisseau (220) et la chape (120) est assurée par un doigt (224) en saillie sur la surface supérieure du coulisseau (220) et engagé dans une rainure (124) formée sur la chape (120).

15. Commutateur selon la revendication 14, caractérisé par le fait que l'axe longitudinal de la rainure (124) est coplanaire de l'axe longitudinal (162) de la manette (160) tandis que l'axe du doigt (224) formé sur le coulisseau (220) est parallèle à l'axe de pivotement de la chape (120).

16. Commutateur selon la revendication 9, caractérisé par le fait que la bascule (180) a la forme générale d'une chape dont chaque aile comporte deux branches orthogonale entre elles.

17. Commutateur selon l'une des revendications 9 ou 16, caractérisé par le fait que la bascule (180) est montée à pivotement sur la chape (120) autour d'un axe (181) parallèle à l'axe de pivotement (IIc) du corps (140), mais distinct de cet axe (IIc).

18. Commutateur selon l'une des revendications 9, 16 ou 17, caractérisé par le fait que des branches de la bascule (180) parallèles à l'extrémité distale du corps (140) comportent un guide rectiligne (183) qui reçoit un pion (147) en saillie sur les flans de l'extrémité distale du corps (140).

19. Commutateur selon l'une des revendications 9, 16 à 18, caractérisé par le fait que l'âme (184) de la bascule (180) porte un pion (185) en saillie, lequel pénètre dans une gorge incurvée (226) formée dans le coulisseau (220).

20. Commutateur selon la revendication 19, caractérisé par le fait que la gorge (226) est formée d'un secteur de cylindre centré autour de l'axe du pion (224) assurant la coopération entre le coulisseau (220) et la chape (120).

21. Commutateur selon l'une des revendications 1 à 20, caractérisé par le fait que les moyens de commutation (200) placés dans le boitier (10) comprennent des contacts (240) liés au coulisseau (240) et un circuit électrique (260) comportant des pistes électriquement conductrices.

22. Commutateur selon la revendication 21, caractérisé par le fait que les contacts (240) ont la forme générale d'une étoile monopièce en matériau électriquement conducteur élastique.

23. Commutateur selon l'une des revendications 21 ou 22, caractérisé par le fait que les contacts (240) ont la forme d'une étoile non plane comportant une base centrale (241) et six branches (242 à 247).

24. Commutateur selon la revendication 23, caractérisé par le fait que la base (241) est liée au coulisseau (220).

25. Commutateur selon l'une des revendications 23 ou 24, caractérisé par le fait que chaque branche (242 à 247) est muni d'un grain de contact à son extrémité libre opposée à la base (241), lequel grain de contact coopère avec une piste (261 à 267) du circuit électrique (260).

26. Commutateur selon l'une des revendications 21 à 25, caractérisé par le fait que les contacts (240) possèdent un plan de symétrie qui coïncide sensiblement avec l'axe longitudinal (162) de la manette.

27. Commutateur selon l'une des revendications 21 à 26, caractérisé par le fait que les contacts (240) comprennent
deux branches (243 et 244) latérales, et généralement transversales à un plan de symétrie qui coopèrent avec des pistes (263 et 264) respectivement pour assurer l'alimentation du commutateur,
deux autres branches (245 et 246) en V prévues à une extrémité de la base (241) qui coopèrent respectivement pour une branche (245) avec une piste (265) pour assurer l'alimentation des lanternes et pour une autre branche (246) avec des pistes (266 et 267) pour assurer alternativement des codes ou des phares,
une branche (247) longitudinale prévue sur l'extrémité de la base (241) opposée aux branches en V (245 et 246) qui coopère avec la piste (267) pour la commande d'appel phare, et
une branche (242) en forme de boucle, qui entoure la branche longitudinale (247) précitée et coopère avec des pistes (261 et 262) pour assurer alternativement l'alimentation des indicateurs de changement de direction gauche et droit.

28. Commutateur selon l'une des revendications 21 à 27, caractérisé par le fait que l'amplitude et le positionnement des pistes (261 à 267) sont adaptés pour assurer le maintien d'un effet de commutation électrique sélectionné quelque soit l'état ou l'évolution des autres fonctions.

29. Commutateur selon l'une des revendications 21 à 28, caractérisé par le fait que deux pistes (261 et 262) sont formées de plages en secteurs de couronne symétriques par rapport à un plan qui coïncide sensiblement avec l'axe longitudinal (162) de la manette et il est ménagé entre ces pistes (261 et 262) un espace qui autorise le passage d'au moins un grain d'une branche (242 et 247) sans contact physique.

30. Commutateur selon l'une des revendications 21 à 29, caractérisé par le fait que deux pistes (266 et 267) sont formées essentiellement de plages parallélépipédiques alignées selon un plan de symétrie , l'une des pistes possédant une tête élargie.

31. Commutateur selon l'une des revendications 21 à 30, caractérisé par le fait qu'une piste (265) est formée d'un secteur de couronne centré sur l'axe d'une poutre (165) excentrée formée sur l'extrémité distale de l'entraîneur (160).

32. Commutateur selon la revendication 1 à 31, caractérisé par le fait que des grains de contact prévus sur des branches de contact (242 et 247) assurant les fonctions de commutation clignotant et appel phare sont sensiblement centrés sur un axe de pivotement du coulisseau (220) matérialisé par un tourillon (224) assurant la liaison entre le coulisseau (220) et la chape (120).

33. Commutateur selon l'une des revendications 1 à 32, caractérisé par le fait qu'en position route, un plot de contact code prévu sur une branche de contact (246) est sensiblement centré sur l'axe d'une poutre (165) excentrée prévue sur l'extrémité de l'entraineur, et l'axe (Ic) de pivotement de la chape (120).

34. Commutateur selon l'une des revendications 1 à 33, caractérisé par le fait qu'un premier plan de pivotement de la manette (100) correspond à une commande des indicateurs de changement de direction, un second plan de pivotement, orthogonal au premier, correspond à une commande de commutation code/phare ou à une commande appel phare instable.

35. Commutateur selon l'une des revendications 1 à 34, caractérisé par le fait que la rotation de la manette (100) autour de son axe correspond à une sélection d'éclairage 0, ville, route.

36. Commutateur selon l'une des revendications 1 à 35, caractérisé par le fait que la translation de la manette (100) correspond à une commande de feu brouillard.

37. Commutateur selon l'une des revendications 1 à 36, caractérisé par le fait que le commutateur est utilisé pour commuter directement la puissance d'alimentation requise pour les moyens d'éclairage ou d'indication.

38. Commutateur selon la revendication 37, caractérisé par le fait qu'il comprend des moyens d'indexation associés aux éléments de la manette (100) définissant des positions stables.

39. Commutateur selon l'une des revendications 1 à 36, caractérisé par le fait que la coopération de contacts (240) et pistes (260) formant les moyens de commutation (200) assure le contrôle de relais ou moyens équivalents, eux-mêmes conçus pour assurer la commutation de la puissance requise.

40. Commutateur selon la revendication 39, caractérisé par le fait qu'il comprend des moyens d'indexation associés aux éléments de la manette (100) définissant des positions instables.

## Patentansprüche

1. Elektrischer Schalter, besonders zum Ansteuern von Beleuchtungs- und Signalgebungsmitteln eines Kraftfahrzeuges, mit einem Gehäuse (10), das Schaltmittel (200) aufnimmt, und einem Bedienungshebel (100), der Steuermittel (120, 140, 160) aufweist, die zur Bewegung bezüglich des Gehäuses (10) in mindestens zwei Schwenkbewegungen (I, II) in zwei zueinander senkrechten Ebenen um Achsen, die im wesentlichen quer zur Längsachse des Bedienungshebels verlaufen, und einer Drehbewegung (III) um die Achse (162) des Bedienungshebels (100) angebracht sind, dadurch gekennzeichnet, daß die Schaltmittel (200) einen einzigen Gleitstein (220) aufweisen, der zur Bewegung in einer Ebene angebracht ist, und Mittel (166, 222; 124, 224), die eine funktionelle Verbindung zwischen den Steuermitteln (120, 140, 160) des Bedienungshebels (100) und dem Gleitstein (220) sicherstellen, so daß der Gleitstein (220) für jede der drei Bewegungen des Bedienungshebels (100) einer speziellen Bewegung unterzogen wird, die dazu eingerichtet ist, eine jeweilige elektrische Funktion sicherzustellen, ohne die Steuerung der beiden anderen, möglichen Funktionen zu stören.

2. Schalter nach Anspruch 1, dadurch gekennzeichnet, daß ein Element (160) des Bedienungshebels (100) außerdem zu einer vierten Bewegung imstande ist, nämlich einer Translationsbewegung längs seiner Achse (162), um eine vierte elektrische Funktion wahrzunehmen, und daß auch Mittel für die funktionelle Verbindung zwischen diesem Element (160) und dem Gleitstein (220) vorgesehen sind.

3. Schalter nach einem der Ansprüche 1 oder 2, dadurch gekennzeichnet, daß der Bedienungshebel (100) ein Gabelstück (120) aufweist, das im Gehäuse (10) zur Schwenkbewegung um eine erste Achse (Ic) geführt ist, einen Bedienungshebelkörper (140), der zur Außenseite des Gehäuses (10) heraustritt und auf dem Gabelstück (120) zur Schwenkbewegung um eine zweite Achse (IIc) angebracht ist, und einen Mitnehmer (160), der als Stange ausgebildet ist, die im Bedienungshebelkörper (140) aufgenommen ist und zur Drehung bezüglich des Körpers (140) um seine Längsachse (162) imstande ist.

4. Schalter nach Anspruch 3, dadurch gekennzeichnet, daß die Achse (Ic) der Schwenkbewegung des Gabelstücks (120) und die Achse (IIc) der Schwenkbewegung des Körpers (140) senkrecht stehen.

5. Schalter nach einem der Ansprüche 3 oder 4, dadurch gekennzeichnet, daß der Mitnehmer (160) außerdem zur Längs-Translationsbewegung in Bezug auf den Körper (140) eingerichtet ist.

6. Schalter nach einem der Ansprüche 3 bis 5, dadurch gekennzeichnet, daß das einem Benutzer nahe Ende (163) des Mitnehmers (160) aus der Außenseite des Körpers (140) und des Gehäuses (10) heraustritt, um dem Benutzer zugänglich zu sein, während das vom Benutzer ferne Ende (164) des Mitnehmers (160) in Inneren des Gehäuses (10) aus dem Körper (140) heraustritt und einen Finger aufweist, der bezüglich der Längsachse (162) des Mitnehmers (160) exzentrisch ist.

7. Schalter nach Anspruch 6, dadurch gekennzeichnet, daß die Achse des Fingers (165), der am vom Benutzer fernen Ende (164) des Mitnehmers (160) vorgesehen ist, im wesentlichen mit der Schwenkachse (Ic) des Gabelstücks (120) zusammenfällt.

8. Schalter nach einem der Ansprüche 3 bis 7, dadurch gekennzeichnet, daß er außerdem eine Wippe (180) aufweist, die eine Verbindung zwischen dem Bedienungshebelkörper (140) und dem Gleitstein (220) sicherstellt.

9. Schalter nach Anspruch 8, dadurch gekennzeichnet, daß die Wippe (180) dazu eingerichtet ist, die Bewegung des Gleitsteins (220) zu verstärken, wenn der Körper (140) verschwenkt wird.

10. Schalter nach einem der Ansprüche 3 bis 9, dadurch gekennzeichnet, daß Mittel (166, 122: 124, 224) zur funktionellen Verbindung zwischen dem Gleitstein (220) und dem Mitnehmer (160) und dem Gabelstück (120) vorgesehen sind.

11. Schalter nach Anspruch 10, dadurch gekennzeichnet, daß die Verbindung zwischen dem Gleitstein (220) und dem Mitnehmer (160) durch ein Kugelgelenk (166) sichergestellt ist, das am Mitnehmerende (165) ausgebildet ist und in eine entsprechende Öffnung (222) des Gleitsteins (220) eingreift.

12. Schalter nach Anspruch 11, dadurch gekennzeichnet, daß die Öffnung (222) des Gleitsteins (220) rotationszylindrisch oder halbkugelig und komplementär zum Kugelgelenk (166) ist.

13. Schalter nach Anspruch 11, in Kombination mit Anspruch 9 herangezogen, dadurch gekennzeichnet, daß die Öffnung (222) des Gleitsteins (220) von einer Nut gebildet ist, die in der Symmetrieebene des Gleitsteins (220) liegt.

14. Schalter nach einem der Ansprüche 10 bis 13, dadurch gekennzeichnet, daß die Verbindung zwischen dem Gleitstein (220) und dem Gabelstück (120) durch einen Finger (224) gewährleistet ist, der auf der oberen Oberfläche des Gleitsteins (220) vorspringt und in eine Nut (124) eingreift, die auf dem Gabelstück (120) ausgebildet ist.

15. Schalter nach Anspruch 14, dadurch gekennzeichnet, daß die Längsachse der Nut (124) koplanar mit der Längsachse (162) des Bedienungshebels (160) ist, während die Achse des Fingers (224), der auf dem Gleitstein (220) ausgebildet ist, parallel zur Schwenkachse des Gabelstücks (120) ist.

16. Schalter nach Anspruch 9, dadurch gekennzeichnet, daß die Wippe (180) die allgemeine Form eines Gabelstücks hat, bei dem jeder Schenkel zwei zueinander senkrechte Arme aufweist.

17. Schalter nach einem der Ansprüche 9 oder 16, dadurch gekennzeichnet, daß die Wippe (180) auf dem Gabelstück (120) schwenkbeweglich um eine Achse (181) angebracht ist, die parallel zur Schwenkachse (IIc) des Körpers (140), aber gegenüber dieser Achse (IIc) unterschiedlich verläuft.

18. Schalter nach einem der Ansprüche 9, 16 oder 17, dadurch gekennzeichnet, daß die Arme der Wippe, die parallel zum vom Benutzer fernen Ende des Körpers (140) verlaufen, eine geradlinige Führung (183) aufweisen, die einen Kulissenstein (147) aufnimmt, der auf den Flanken des vom Benutzer fernen Endes des Körpers (140) vorspringt.

19. Schalter nach einem der Ansprüche 9 sowie 16 bis 18, dadurch gekennzeichnet, daß die Seele (184) der Wippe (180) einen vorspringenden Kulissenstein (185) trägt, der in eine gekrümmte Auskehlung (226) eindringt, die im Gleitstein (220) ausgebildet ist.

20. Schalter nach Anspruch 19, dadurch gekennzeichnet, daß die Auskehlung (226) aus einem Zylindersektor gebildet ist, der um die Achse des Kulissensteins (224) zentriert ist, was die Zusammenwirkung zwischen dem Gleitstein (220) und dem Gabelstück (120) gewährleistet.

21. Schalter nach einem der Ansprüche 1 bis 20, dadurch gekennzeichnet, daß die Schaltmittel (200), die in das Gehäuse (10) eingesetzt sind, Kontakte (240) aufweisen, die mit dem Gleitstein (240) verbunden sind, sowie eine elektrische Schaltung (260), die elektrisch leitfähige Bahnen aufweist.

22. Schalter nach Anspruch 21, dadurch gekennzeichnet, daß die Kontakte (240) die allgemeine Form eines einstückigen Sterns aus elastischem, elektrisch leitfähigem Material aufweisen.

23. Schalter nach einem der Ansprüche 21 oder 22, dadurch gekennzeichnet, daß die Kontakte (240) die Form eines nicht-ebenen Sterns mit einer mittigen Basis (241) und sechs Verzweigungen (242 bis 247) aufweist.

24. Schalter nach Anspruch 23, dadurch gekennzeichnet, daß die Basis (241) mit dem Gleitstein (220) verbunden ist.

25. Schalter nach einem der Ansprüche 23 oder 24, dadurch gekennzeichnet, daß jede Verzweigung (242 bis 247) an ihrem freien Ende, das der Basis (241) entgegengesetzt ist, mit einer Kontaktwarze versehen ist, und daß die Kontaktwarze mit einer Bahn (261 bis 267) der elektrischen Schaltung (260) zusammenwirkt.

26. Schaltung nach einem der Ansprüche 21 bis 25, dadurch gekennzeichnet, daß die Kontakte (240) eine Symmetrieebene aufweisen, die im wesentlichen mit der Längsachse (162) des Bedienungshebels zusammenfällt.

27. Schalter nach einem der Ansprüche 21 bis 26, dadurch gekennzeichnet, daß die Kontakte (240) die folgenden Merkmale aufweisen:
zwei seitliche und insgesamt quer zu einer Symmetrieebene verlaufende Verzweigungen (243 und 244), die jeweils mit Bahnen (263 und 264) zusammenwirken, um die Einspeisung des Schalters zu gewährleisten,
zwei andere Verzweigungen (245 und 246) in V-Anordnung, die an einem Ende der Basis (241) vorgesehen sind, von denen jeweils eine Verzweigung (245) mit einer Bahn (265) zusammenwirkt, um die Einspeisung von Leuchten sicherzustellen, und eine andere Verzweigung (246) mit Bahnen (266 und 267), um abwechselnd Abblend- oder Fernlicht sicherzustellen,
eine längsverlaufende Verzweigung (247), die auf dem Ende der Basis (241) und den Verzweigungen (245 und 246) in V-Anordnung gegenüberliegend vorgesehen ist und der Bahn (267) für die Ansteuerung der Lichthupe zusammenwirkt, und
eine schlaufenförmige Verzweigung (242), die die vorgenannte längsverlaufende Verzweigung (247) umgibt und mit Bahnen (261 und 262) zusammenwirkt, um abwechselnd die Einspeisung des linken und rechten Fahrtrichtungsanzeigers sicherzustellen.

28. Schalter nach einem der Ansprüche 21 bis 27, dadurch gekennzeichnet, daß die Größe und Positionierung der Bahnen (261 bis 267) dazu eingerichtet sind, die Aufrechterhaltung einer gewählten, elektrischen Schaltwirkung sicherzustellen, gleichgültig, wie der Zustand oder Ablauf der anderen Funktionen auch sein mag.

29. Schalter nach einem der Ansprüche 21 bis 28, dadurch gekennzeichnet, daß zwei Bahnen (261 und 262) aus kranzsektorenförmigen Bereichen gebildet sind, die bezüglich einer Ebene symmetrisch sind, die im wesentlichen mit der Längsachse (162) des Bedienungshebels zusammenfällt, und daß zwischen diesen Bahnen (261 und 262) ein Zwischenraum ausgebildet ist, der den Durchtritt mindestens einer Warze einer verzweigung (242 und 247) ohne physischen Kontakt gestattet.

30. Schalter nach einem der Ansprüche 21 bis 29, dadurch gekennzeichnet, daß zwei Bahnen (266 und 267) im wesentlichen aus quaderförmigen Bereichen gebildet sind, die längs einer Symmetrieebene ausgerichtet sind, wobei einer der Bereiche einen verbreiterten Kopf aufweist.

31. Schalter nach einemd er Ansprüche 21 bis 30, ddurch gekennzeichnet, daß eine Bahn (265) aus einem Kranzsektor gebildet ist, der auf die Achse eines exzentrischen Balkens (165) zentriert ist, die am vom Benutzer fernliegenden Ende des Mitnehmers (160) gebildet ist.

32. Schalter nach Anspruch 1 bis 31, dadurch gekennzeichnet, daß die Kontaktwarzen, die auf Kontaktverzweigungen (242 und 247) vorgesehen sind, die die Blinker- und Lichthupenfunktionen sicherstellen, im wesentlichen auf eine Schwenkachse des Gleitsteins (220) zentriert sind, die durch einen Drehzapfen (224) verkörpert ist, der die Verbindung zwischen dem Gleitstein (220) und dem Gabelstück (120) sicherstellt.

33. Schalter nach einem der Ansprüche 1 bis 32, dadurch gekennzeichnet, daß in der Überlandfahrt-Position ein Abblend-Kontaktklotz, der auf einer Kontaktverzweigung (246) vorgesehen ist, im wesentlichen auf die Achse eines exzentrischen Trägers (165) zentriert ist, der am Ende des Mitnehmers vorgesehen ist, sowie auf die Schwenkachse (Ic) des Gabelstücks (120).

34. Schalter nach einem der Ansprüche 1 bis 33, dadurch gekennzeichnet, daß eine erste Schwenkebene des Betätigungshebels (100) der Steuerung der Fahrtrichtungsanzeiger entspricht, und eine zweite Schwenkebene senkrecht zur ersten einer Abblendlicht-/Fernlicht-Schaltsteuerung einer instabilen Lichthupenansteuerung entspricht.

35. Schalter nach einem der Ansprüche 1 bis 34, dadurch gekennzeichnet, daß die Drehung des Bedienungshebels (100) der Wahl einer Null-, Stadt- oder Überlandfahrtbeleuchtung entspricht.

36. Schalter nach einem der Ansprüche 1 bis 35, dadurch gekennzeichnet, daß die Translationsbewegung des Bedienungshebels (100) einer Ansteuerung der Nebelschlußleuchte entspricht.

37. Schalter nach einem der Ansprüche 1 bis 36, dadurch gekennzeichnet, daß der Schalter verwendet wird, um unmittelbar den Einspeisungsstrom zu steuern, der für die Beleuchtungs- oder Anzeigemittel erforderlich ist.

38. Schalter nach Anspruch 37, dadurch gekennzeichnet, daß er Indexierungsmittel aufweist, die den Elementen des Bedienungshebels (100) zugeordnet sind und stabile Lagen definieren.

39. Schalter nach einem der Ansprüche 1 bis 36, dadurch gekennzeichnet, daß die Zusammenwirkung von Kontakten (240) und Bahnen (260), die die Schaltmittel (200) bilden, die Steuerung von Relais oder äquivalenten Mitteln sicherstellt, die ihrerseits dazu ausgelegt sind, das Schalten der erforderlichen Leistung sicherzustellen.

40. Schalter nach anspruch 39, dadurch gekennzeichnet, daß er Indexierungsmittel aufweist, die den Elementen des Bedienungshebels (100) zugeordnet sind und die instabilen Positionen definieren.

## Claims

1. An electrical switch, in particular for controlling the lighting and signalling means of a motor vehicle, the switch comprising a housing (10) which houses switch means (200), and a lever (100) which includes control means (120, 140, 160) that are mounted to be displaced relative to the housing (10) in at least two pivoting motions (I, II) in mutually perpendicular planes about axes that are substantially transverse to the longitudinal axis of the lever and in rotary motion (III) about the axis (162) of the lever (100) in order to control respective ones of at least three basic electrical functions, the switch being characterized by the fact that the switch means (200) comprise a single slide (220) which is mounted to be displaced in a plane, and functional connection means (166, 222; 124, 224) ensuring functional connection between the control means (120, 140, 160) of the lever (100) and the slide (220), so that the slide (220) is subjected to a specific kind of displacement for each of the three kinds of displacement of the lever (100), and is capable of ensuring respective electrical functions without disturbing control of the other two potential functions.

2. A switch according to claim 1, characterized by the fact that an element (160) of the lever (100) is also capable of a fourth kind of motion in translation along its axis (162) in order to perform a fourth electrical function, and by the fact that functional connection means are also provided for functionally connecting said element (160) and the slide (220).

3. A switch according to claim 1 or 2, characterized by the fact that the lever (100) comprises a fork (120) which is guided to pivot inside the housing (10) about a first axis (Ic), a lever body (140) which emerges outside the housing (10) and is mounted to pivot on the fork (120) about a second axis (llc), and a driver (160) formed by a rod housed in the lever body (140) and capable of rotating relative to the body (140) about its longitudinal axis (162).

4. A switch according to claim 3, characterized by the fact that the pivot axis (Ic) of the fork (120) and the pivot axis (llc) of the body (140) are orthogonal.

5. A switch according to claim 3 or 4, characterized by the fact that the driver (160) is also capable of longitudinal translation relative to the body (140).

6. A switch according to any one of claims 3 to 5, characterized by the fact that the proximal end (163) of the driver (160) emerges outside of the body (140) and of the housing (10) so that it can be accessed by a user, while the distal end (164) of the driver (160), inside the housing (10), emerges from the body (140) and includes a finger which is offset relative to the longitudinal axis (162) of the driver (160).

7. A switch according to claim 6, characterized by the fact that the axis of the finger (165) provided at the distal end (164) of the driver (160) substantially coincides with the pivot axis (Ic) of the fork (120).

8. A switch according to any one of claims 3 to 7, characterized by the fact that it further includes a rocker (180) which ensures connection between the lever body (140) and the slide (220).

9. A switch according to claim 8, characterized by the fact that the rocker (180) is designed to amplify displacement of the slide (220) when the body (140) is pivoted.

10. A switch according to any one of claims 3 to 9, characterized by the fact that it is provided with functional connection means (166, 222; 124, 224) ensuring functional connection between the slide (220), the driver (160), and the fork (120).

11. A switch according to claim 10, characterized by the fact that the connection between the slide (220) and the driver (160) is ensured by a ball (166) formed on the end of the finger (165) and engaged in a corresponding opening (222) of the slide (220).

12. A switch according to claim 11, characterized by the fact that the opening (222) of the slide (220) has circular symmetry or is a hemisphere, and is complementary to the ball (166).

13. A switch according to claim 11, taken in combination with claim 9, characterized by the fact that the opening (222) of the slide (220) is formed by a groove situated in the plane of symmetry of the slide (220).

14. A switch according to any one of claims 10 to 13, characterized by the fact that the connection between the slide (220) and the fork (120) is provided by a pin (224) which projects from the top surface of the slide (220) and is engaged in a groove (124) formed in the fork (120).

15. A switch according to claim 14, characterized by the fact that the longitudinal axis of the groove (124) is coplanar to the longitudinal axis (162) of the lever (160), while the axis of the pin (224) formed on the slide (220) is parallel to the pivot axis of the fork (120).

16. A switch according to claim 9, characterized by the fact that the rocker (180) is generally fork-shaped, and each tine of the fork includes two branches which are orthogonal to each other.

17. A switch according to claim 9 or 16, characterized by the fact that the rocker (180) is mounted to pivot on the fork (120) about an axis (181) parallel to the pivot axis (llc) of the body (140), but separate from said axis (llc).

18. A switch according to claim 9, 16, or 17, characterized by the fact that the branches of the rocker (180) which are parallel to the distal end of the body (140) include respective rectilinear guides (183) which receive respective pins (147) which project from the flanks of the distal end of the body (140).

19. A switch according to any one of claims 9, and 16 to 18, characterized by the fact that the web (184) of the rocker (180) carries a projecting pin (185) which penetrates into a curved groove (226) formed in the slide (220).

20. A switch according to claim 19, characterized by the fact that the groove (226) is formed by a cylindrical sector which is centered about the axis of the pin (224), ensuring cooperation between the slide (220) and the fork (120).

21. A switch according to any one of claims 1 to 20, characterized by the fact that the switch means (200) placed in the housing (10) comprise contacts (240) connected to the slide (220), and an electrical circuit (260) including electrically conductive tracks.

22. A switch according to claim 21, characterized by the fact that the contacts (240) are generally in the form of a single star-shaped part of resilient electrically conductive material.

23. A switch according to claim 21 or 22, characterized by the fact that the contacts (240) are in the form of a non-planar star having a central base (241) and six branches (242 to 247).

24. A switch according to claim 23, characterized by the fact that the base (241) is connected to the slide (220).

25. A switch according to claim 23 or 24, characterized by the fact that each branch (242 to 247) is provided with a contact tip at its free end remote from the base (241), which contact tip cooperates with a track (261 to 267) of the electrical circuit (260).

26. A switch according to any one of claims 21 to 25, characterized by the fact that the contacts (240) possess a plane of symmetry which substantially coincides with the longitudinal axis (162) of the lever.

27. A switch according to any one of claims 21 to 26, characterized by the fact that the contacts (240) comprise:
two lateral branches (243 and 244) which are generally transverse to a plane of symmetry, and which cooperate with the respective tracks (263 and 264) for powering the switch;
two V-shaped other branches (245 and 246) provided at one end of the base (241) which cooperate respectively for one of the branches (245) with a track (265) to ensure that the sidelights are powered, and for the other branch (246) with respective tracks (266 and 267) for powering either the low beam or the high beam;
a longitudinal branch (247) provided on the end of the base (241) remote from the V-shaped branches (245 and 246), which longitudinal branch cooperates with a track (267) to flash the headlights; and
a loop-shaped branch (242) which surrounds the above-mentioned longitudinal branch (247) and which cooperates with respective tracks (261 and 262) to power either the right or the left direction-indicators.

28. A switch according to any one of claims 21 to 27, characterized by the fact that the amplitudes and the positions of the tracks (261 to 267) are designed to ensure that the selected electrical switch effects are maintained whatever the states of the other functions or whatever the changes therein.

29. A switch according to any one of claims 21 to 28, characterized by the fact that two tracks (261 and 262) are formed by areas constituting sectors of a ring, which areas are symmetrical about a plane which substantially coincides with the longitudinal axis (162) of the lever, and a gap is left between the tracks (261 and 262) to enable at least one tip of a branch (242 and 247) to pass without making physical contact.

30. A switch according to any one of claims 21 to 29, characterized by the fact that two tracks (266 and 267) are essentially formed by rectangular areas which are in alignment along a plane of symmetry, one of the tracks possessing an enlarged head.

31. A switch according to any one of claims 21 to 30, characterized by the fact that a track (265) is formed by a sector of a ring which is centered on the axis of an offset finger (165) which is formed on the distal end of the driver (160).

32. A switch according to any one of claims 1 to 31, characterized by the fact that the contact tips provided on the contact branches (242 and 247) which ensure the indicator and headlight-flash switch functions are substantially centered on a pivot axis of the slide (220) embodied by a pin (224) which ensures connection between the slide (220) and the fork (120).

33. A switch according to any one of claims I to 32, characterized by the fact that, in the side-and-headlights-on position, a low-beam contact block provided on a contact branch (246) is substantially centered on the axis of an offset finger (165) provided on the end of the driver, and the pivot axis (Ic) of the fork (120).

34. A switch according to any one of claims 1 to 33, characterized by the fact that a first pivot plane of the lever (100) corresponds to controlling a direction-indicator, and a second pivot plane, which is orthogonal to the first, corresponds to a switch for low-beam/high-beam control of headlights or for unstable headlight-flasher control.

35. A switch according to any one of claims I to 34, characterized by the fact that rotating the lever (100) about its axis corresponds to a lighting selection 0, sidelights-on, or side-and-headlights-on.

36. A switch according to any one of claims I to 35, characterized by the fact that translation of the lever (100) corresponds to a fog-light control.

37. A switch according to any one of claims I to 36, characterized by the fact that the switch is used directly to switch the power supply required for the lighting or indicator means.

38. A switch according to claim 37, characterized by the fact that it comprises indexing means associated with the elements of the lever (100) defining the positions that are stable.

39. A switch according to any one of claims I to 36, characterized by the fact that the cooperation of the contacts (240) and the tracks (260) forming the switch means (200) control relays or equivalent means, themselves designed to switch the power required.

40. A switch according to claim 39, characterized by the fact that it comprises indexing means associated with the elements of the lever (100) defining the positions that are unstable.
